# FASCICULE DE BREVET EUROPEEN

(11) **EP 2 311 355 B1**
(45) Date de publication et mention de la délivrance du brevet: **27.03.2013**
(21) Numéro de dépôt: 10176927.1
(22) Date de dépôt: 15.09.2010
(51) Int. Cl.: A47J 37/06

(54) **Appareil à raclette longiligne**
Längliches Raclette-Gerät
Elongate raclette device

(30) Priorité: 08.10.2009 FR 0957012
(43) Date de publication de la demande: 20.04.2011
(73) Titulaire: SEB SA, 69130 Ecully (FR)
(72) Inventeur: Lequy, David, 73000 Chambéry le Vieux (FR); Veniat, Jacky, 74150 Rumilly (FR)
(74) Mandataire: Novagraaf Technologies

(56) Documents cités:
- EP-A1- 1 486 152
- CH-B1- 698 593
- DE-U1-202008 015 535
- FR-A1- 2 922 745

## Description

La présente invention concerne un appareil à raclette permettant la cuisson d'aliments disposés dans des coupelles.

On connaît un appareil à raclette du type selon lequel, en utilisation, les coupelles sont disposées sur une seule ligne. Toutefois, le nombre de coupelles pouvant être utilisées est de quatre. Ces appareils à raclette longiligne présentent l'inconvénient d'avoir une largeur particulièrement faible (de l'ordre de la profondeur de la coupelle (manche exclu), ce qui entraîne une forte déperdition de chaleur (disparition de l'effet « four » présent dans tous les appareils « larges » qui sont soit rectangulaires à deux rangées de coupelles, soit ovales, soit circulaires).

Les documents DE 20 2008 015 535 U1, FR 2 922 745 A1, EP 1 486 152 A1 et CH 698 593 B1 divulguent des exemples de ces appareils.

Par ailleurs, ces appareils « larges » sont peu pratiques quand le nombre de convives est important (au-delà de quatre), la distance séparant l'appareil des convives qui en sont les plus éloignés oblige ces derniers à demander de l'aide à leurs voisins.

La présente invention vise à réaliser un appareil à raclette facilement accessible à au moins cinq convives disposés autour d'une table.

Selon l'invention, l'appareil à raclette du type précité est conformé de façon à pouvoir recevoir au moins six coupelles en ligne, avec une sole unique sur laquelle sont reçues en ligne toutes les coupelles, de façon amovible.

Ainsi, la longueur particulièrement importante de l'appareil lui permet d'être facilement accessible de tous les convives quand il est disposé au centre de la table. En effet, son rapport largeur sur longueur est plus proche de celui correspondant d'une table ovale ou rectangulaire que ne le sont ceux des appareils « larges ».

D'autres particularités et avantages de la présente invention apparaitront dans un mode de réalisation donné à titre d'exemple non limitatif et illustré par les dessins mis en annexe dans lesquels :
La figure 1 est une vue d'une face longitudinale d'un appareil à conforme présente à la présente invention ;
La figure 2 est une vue de dessus de l'appareil illustré à la figure 1 ;
La figure 3 est une vue d'une face transversale de l'appareil illustré à la figure 1 ;
La figure 4 est une illustration de la meilleure accessibilité de l'appareil pour des convives assis à une table ;
La figure 5 est une vue en coupe longitudinale d'une extrémité longitudinale de l'appareil illustré à la figure 1 ;
La figure 6 est une vue en coupe transversale de l'appareil illustré à la figure 1 ; et
La figure 7 est une illustration de la protection thermique des poignées de l'appareil à raclette.

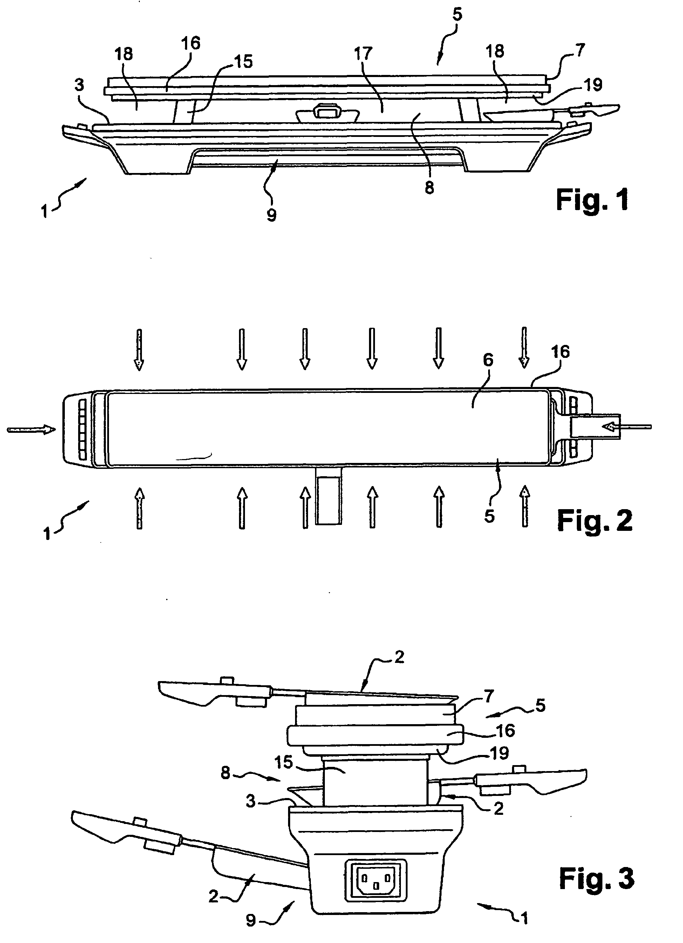

Un appareil à raclette 1 illustré aux figures 1 à 3 est de forme longiligne et il est adapté à recevoir, en utilisation, au moins six coupelles 2 destinées à recevoir un aliment à cuire, ces coupelles 2 étant disposées sur une seule ligne. De façon classique, la surface de cuisson de chaque coupelle est d'au moins 25 cm2 et permet la cuisson d'une portion de fromage.

Cet appareil 1 comprend une sole 3 qui est formée par une plaque adaptée à recevoir les coupelles 2 pendant l'opération de cuisson, une résistance électrique 4 qui est disposée au-dessus de la sole 3 (ici, la résistance 4 est à au moins 30 mm au-dessus de la sole 3) et est destinée à transmettre un rayonnement thermique aux coupelles 2 qui sont disposées sous elle, et un capot 5 qui recouvre la résistance électrique 4 et qui est destiné à empêcher les utilisateurs d'avoir accès à cette dernière.

L'appareil à raclette a une puissance qui est d'au moins 150 W par coupelle.

Dans un but de renfort mécanique contre des distorsions que la chaleur produite par la résistance électrique 4 pourrait causer, la surface principale 6 sensiblement horizontale du capot 5 est bordée par une nervure périphérique 7 qui s'étend verticalement des deux côtés de la surface principale 6. De ce fait, la section du capot 5 a la forme d' un H dont la barre horizontale est allongée. Dans le présent mode de réalisation, le capot 5 est conformé de façon à former une plaque de cuisson pour des aliments qui sont déposés dessus. De façon plus précise, ce capot 5 est amovible.

L'appareil à raclette 1 possède une chambre de cuisson 8 qui est délimitée vers le bas par la sole 3 et vers le haut par le capot 5, la résistance électrique 4 y étant disposé dans la partie supérieure. Cette chambre de cuisson 8 a un profil longiligne comme l'appareil 1.

En outre, l'appareil à raclette 1 comprend, sous la sole 3, une chambre de rangement 9 qui permet le rangement des coupelles 2, notamment entre deux opérations de cuisson. En l'occurrence, vu le profil longiligne de l'appareil, et donc de la chambre de rangement 9, le maintien des coupelles 2 en position rangée dans la chambre de rangement 9 est réalisée par leur mise en porte-à-faux. A cet effet, la surface de fond 10 des coupelles 2 repose sur une surface d'appui 11 qui se trouve à la base de la chambre de rangement 9, et le rebord supérieur 12 des coupelles 2 est en contact avec une cloison 13 qui forme la limite supérieure de la chambre de rangement 9 d'avec un espace technique 14 dont la limite supérieure est formée par la sole 3.

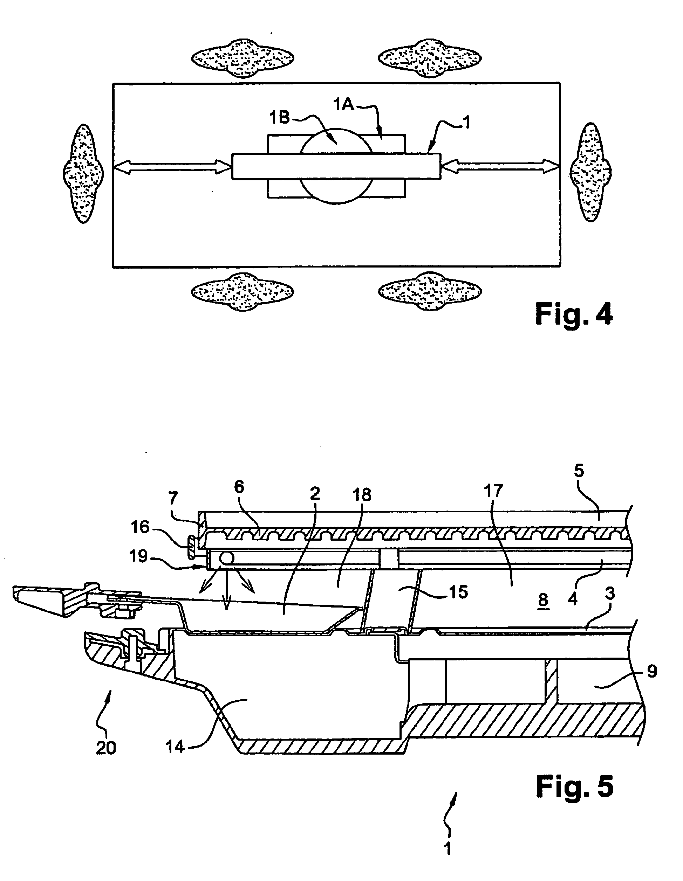

Par ailleurs, l'appareil à raclette 1 comprend également au moins deux piliers 15 qui sont disposés dans la chambre de cuisson et qui supportent le capot 5. De façon plus précise, ces deux piliers 15 supportent un cadre périphérique 16 auquel est fixée la résistance 4, ce cadre supportant le capot 5 (ici, amovible). Le capot 5 et la résistance électrique 4 sont par ailleurs ceinturés par le cadre 16. Dans le présent exemple, les deux faces opposées de la surface principale 6 du capot sont conformées pour former des surfaces de cuisson : l'une (surface supérieure de la figure 5) est lisse de façon à permettre une cuisson du type plancha, l'autre (surface inférieure de la figure 5) comprend des rainures de façon à permettre une cuisson du type grille-viande.

Au moins un pilier 15 (ici, un seul) est utilisé pour le passage de la résistance électrique 4 et permettre ainsi la connexion de ses extrémités libres sous la sole 3, dans l'espace technique 14. De façon plus précise, ce pilier 15 ceinture les brins verticaux de la résistance électrique 4 qui relient la partie principale de la résistance s'étendant le long du capot 5 aux extrémités libres.

Deux piliers 15 sont disposés de façon à diviser la chambre de cuisson 8 en une zone centrale 17 et deux zones externes 18 qui sont disposées de chaque côté de la zone centrale 17, dans le prolongement longitudinal de cette dernière.

La zone centrale 17 est délimitée longitudinalement par les deux piliers 15, et, de ce fait, est accessible des deux côtés opposés l'un à l'autre qui s'étendent d'un pilier 15 à l'autre, comme illustré à la figure 2. Elle s'étend longitudinalement de façon à pouvoir recevoir au moins quatre coupelles 2 en ligne. Chaque zone externe 18 est accessible par le côté qui fait face au pilier 15 la séparant de la zone centrale 17, et par les deux côtés opposés l'un à l'autre qui s'étendent entre ce pilier 15 et le côté qui lui fait face. Chaque zone externe 18 est adaptée à recevoir au moins une coupelle 2.

Comme illustré à la figure 1, un appareil à raclette 1 conforme à la présente invention est plus accessible pour un plus grand nombre de convives que ne le sont un appareil à raclette rectangulaire large 1A ou un appareil à raclette circulaire 1B.

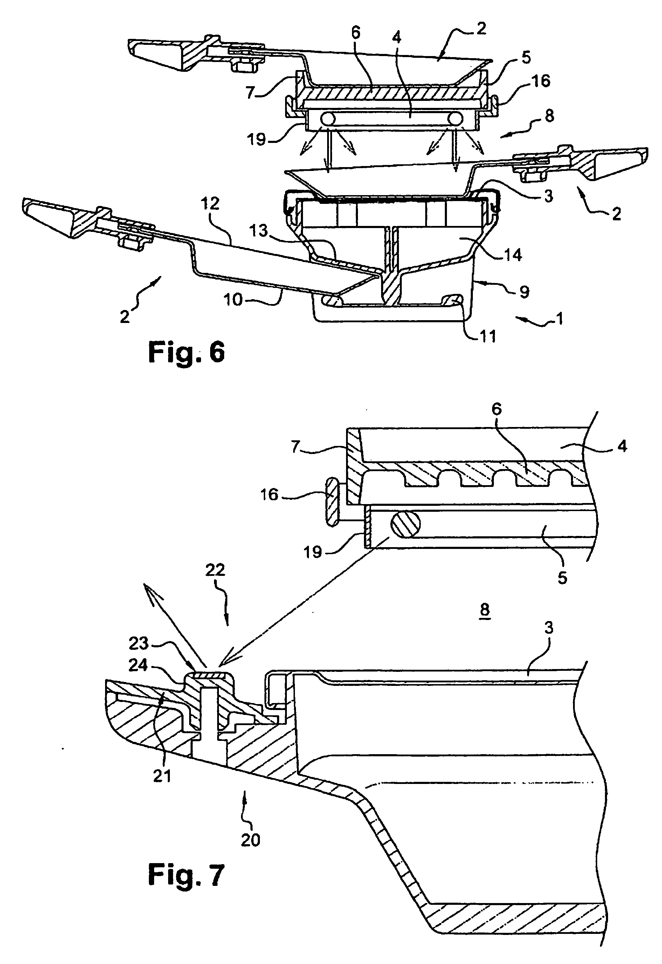

En outre, afin de limiter le rayonnement thermique émis par la résistance électrique 4 hors de la chambre de cuisson 8 et ainsi de compenser la faiblesse de l'effet « four » causé par la finesse de cette chambre de cuisson 8, l'appareil à raclette 1 comprend un réflecteur latéral vertical 19 qui est disposé autour de la résistance électrique 4. Ce réflecteur 19 ceinture la résistance électrique 4 et s'étend verticalement vers le bas au-delà de celle-ci. Il est supporté par le cadre 16. En outre, afin de limiter l'impact thermique de la résistance 4 sur les poignées 20 de l'appareil 1, le réflecteur 19 est séparé de la résistance 4 d'une distance telle que, compte tenu de l'extension verticale vers le bas du réflecteur 19, le rayonnement direct de la résistance 4 n'atteint pas la zone de préhension 21 des poignées 20. Dans le même but de limiter l'impact thermique, chaque poignée 20 comprend une zone de liaison 22 par laquelle la zone de préhension 21 est reliée au corps de l'appareil à raclette, cette zone de liaison 22 comprenant une surface réfléchissante 23 (ici, une plaque en inox) qui est adaptée à réfléchir le rayonnement thermique direct de la résistance électrique 4 (cf. figure 7). Par ailleurs, afin d'éviter à un utilisateur de saisir la zone de liaison 22, cette dernière est séparée de la zone de préhension par une butée 24 contre laquelle les doigts d'un utilisateur viennent naturellement en butée quand il veut saisir les poignées 20.

La présente invention n'est pas limitée au présent mode de réalisation. Il serait ainsi possible d'utiliser sur d'autres types d'appareil de cuisson électrique, surtout ceux cuisant par rayonnement issu d'une résistance disposée en périphérie ou d'un réflecteur, des poignées ayant une zone de préhension et une zone de liaison ayant une surface réfléchissante. Il serait également possible de séparer la zone de préhension de la zone de liaison par une butée.

## Revendications

1. Appareil à raclette (1) de forme longiligne comprenant au moins six coupelles (2) qu'il est adapté à recevoir en utilisation toutes sur une seule ligne, **caractérisé en ce qu'**il comprend une sole (3) unique sur laquelle sont reçues en ligne toutes les coupelles (2) de façon amovible.

2. Appareil à raclette (1) selon la revendication 1, **caractérisé en ce que** l'appareil (1) comprend, sous la sole (3), une chambre de rangement (9) pour le rangement des coupelles (2) amovibles.

3. Appareil à raclette (1) selon la revendication 2, **caractérisé en ce que** les coupelles (2) présentent chacune une surface de fond (10) et un rebord supérieur (12), ladite surface de fond (10) reposant sur une surface d'appui (11) qui se trouve à la base de la chambre de rangement (9), et ledit rebord supérieur (12) des coupelles (2) étant en contact avec une cloison (13) qui forme la limite supérieure entre la chambre de rangement (9) et un espace technique (14) dont la limite supérieure est formée par la sole (3).

4. Appareil à raclette (1) selon l'une quelconque des revendications précédentes, **caractérisé en ce qu'**il comprend une chambre de cuisson (8) qui est délimitée vers le haut par un capot (5), qui est adaptée à recevoir les coupelles (2) et dans laquelle sont disposés une résistance électrique (4) et deux piliers (15) supportant le capot (5), les piliers (15) divisant la chambre de cuisson (8) en une zone centrale (17) et deux zones externes (18) disposées dans le prolongement longitudinal de la zone centrale (17).

5. Appareil à raclette (1) selon la revendication 4, **caractérisé en ce que** la zone centrale (17) est accessible des deux côtés qui se font face et qui s'étendent d'un pilier (15) à l'autre.

6. Appareil à raclette (1) selon l'une des revendications 4 ou 5, **caractérisé en ce que** chaque zone externe (18) est accessible par le côté opposé au pilier (15) qui la délimite vis-à-vis de la zone centrale (17), et par les deux côtés qui se font face et qui s'étendent entre ce pilier (15) et le côté qui lui est opposé.

7. Appareil à raclette (1) selon l'une des revendications 4 à 6, **caractérisé en ce que** chaque zone externe (18) est adaptée à recevoir au moins une coupelle (2)

8. Appareil à raclette (1) selon l'une des revendications 4 à 7, **caractérisé en ce qu'**au moins un pilier (15) est utilisé pour le passage de la résistance électrique (4).

9. Appareil à raclette (1) selon l'une des revendications 4 à 8, **caractérisé en ce qu'**il comprend un réflecteur latéral vertical (19) disposé autour de la résistance électrique (4).

10. Appareil à raclette (1) selon la revendication 9, **caractérisé en ce que** le réflecteur (19) s'étend verticalement vers le bas au-delà de la résistance (4) et est séparé latéralement de celle-ci de sorte que le rayonnement direct n'atteint pas la zone de préhension (21) de poignées (20) équipant l'appareil (1).

11. Appareil à raclette (1) selon l'une des revendications 1 à 9, **caractérisé en ce que** l'appareil comprend des poignées (20) ayant chacune une zone de préhension (21) et une zone de liaison (22) qui relie la zone de préhension (21) au corps chauffant de l'appareil et qui comprend une surface réfléchissante (23) adaptée à réfléchir le rayonnement thermique direct de la résistance électrique (4).

12. Appareil à raclette (1) selon l'une des revendications 4 à 9 ou la revendication 4 et l'une des revendications 10 ou 11, **caractérisé en ce que** le capot (5) comprend une surface principale (6) horizontale bordée par une nervure périphérique (7) s'étendant verticalement de part et d'autre de la surface principale (6).

## Claims

1. Elongate raclette device (1) comprising at least six cups (2) that it is adapted to receive in use all on a single line, **characterized in that** it comprises a single soleplate (3) on which all the cups (2) are removably received in line.

2. Raclette device (1) according to Claim 1, **characterized in that** the device (1) comprises, beneath the soleplate (3), a storage chamber (9) for the storing of the removable cups (2).

3. Raclette device (1) according to Claim 2, **characterized in that** the cups (2) each have a bottom surface (10) and an upper rim (12), the said bottom surface (10) resting on a bearing surface (11) which is at the base of the storage chamber (9), and the said upper rim (12) of the cups (2) being in contact with a partition (13) which forms the upper limit between the storage chamber (9) and a technical space (14) of which the upper limit is formed by the soleplate (3).

4. Raclette device (1) according to any one of the preceding claims, **characterized in that** it comprises a cooking chamber (8) which is delimited towards the top by a cap (5), which is adapted to receive the cups (2) and in which an electrical resistance (4) and two pillars (15) supporting the cap (5) are placed, the pillars (15) dividing the cooking chamber (8) into a central zone (17) and two outer zones (18) placed in the longitudinal extension of the central zone (17).

5. Raclette device (1) according to Claim 4, **characterized in that** the central zone (17) can be accessed from the two sides which face one another and which extend from one pillar (15) to the other.

6. Raclette device (1) according to one of Claims 4 and 5, **characterized in that** each outer zone (18) can be accessed from the side opposite to the pillar (15) which delimits it with respect to the central zone (17), and from the two sides which face one another and which extend between this pillar (15) and the side that is opposite it.

7. Raclette device (1) according to one of Claims 4 to 6, **characterized in that** each outer zone (18) is adapted to receive at least one cup (2).

8. Raclette device (1) according to one of Claims 4 to 7, **characterized in that** at least one pillar (15) is used for the passage of the electric resistance (4).

9. Raclette device (1) according to one of Claims 4 to 8, **characterized in that** it comprises a vertical lateral reflector (19) placed around the electric resistance (4).

10. Raclette device (1) according to Claim 9, **characterized in that** the reflector (19) extends vertically downwards beyond the resistance (4) and is separated laterally from the latter such that the direct radiation does not reach the gripping zone (21) of handles (20) fitted to the device (1).

11. Raclette device (1) according to one of Claims 1 to 9, **characterized in that** the device comprises handles (20) each having a gripping zone (21) and a connecting zone (22) which connects the gripping zone (21) to the heating body of the device and which comprises a reflective surface (23) adapted to reflect the direct thermal radiation of the electric resistance (4).

12. Raclette device (1) according to one of Claims 4 to 9 or Claim 4 and one of Claims 10 and 11, **characterized in that** the cap (5) comprises a main horizontal surface (6) bordered by a peripheral rib (7) extending vertically on either side of the main surface (6).

## Patentansprüche

1. Raclette-Gerät (1) länglicher Form, das mindestens sechs Pfännchen (2) enthält, die es bei der Benutzung alle in einer einzigen Reihe aufnehmen kann, **dadurch gekennzeichnet, dass** es einen einzigen Herdboden (3) enthält, auf dem alle Pfännchen (2) in Reihe entfernbar aufgenommen werden.

2. Raclette-Gerät (1) nach Anspruch 1, **dadurch gekennzeichnet, dass** das Gerät (1) unter dem Herdboden (3) einen Stauraum (9) zum Verstauen der entfernbaren Pfännchen (2) enthält.

3. Raclette-Gerät (1) nach Anspruch 2, **dadurch gekennzeichnet, dass** die Pfännchen (2) jedes eine Bodenfläche (10) und eine obere Randleiste (12) haben, wobei die Bodenfläche (10) auf einer Auflagefläche (11) ruht, die sich am Boden des Stauraums (9) befindet, und die obere Randleiste (12) der Pfännchen (2) mit einer Trennwand (13) in Kontakt ist, die die Obergrenze zwischen dem Stauraum (9) und einem Technikraum (14) bildet, dessen Obergrenze durch den Herdboden (3) gebildet wird.

4. Raclette-Gerät (1) nach einem der vorhergehenden Ansprüche, **dadurch gekennzeichnet, dass** es einen nach oben von einem Deckel (5) begrenzten Garraum (8) enthält, der geeignet ist, um die Pfännchen (2) aufzunehmen und in dem ein elektrischer Widerstand (4) und zwei den Deckel (5) tragende Säulen (15) angeordnet sind, wobei die Säulen (15) den Garraum (8) in eine zentrale Zone (17) und zwei Außenzonen (18) teilen, die in der Längsverlängerung der zentralen Zone (17) angeordnet sind.

5. Raclette-Gerät (1) nach Anspruch 4, **dadurch gekennzeichnet, dass** die zentrale Zone (17) von den zwei Seiten zugänglich ist, die einander gegenüberliegen und sich von einer Säule (15) zur anderen erstrecken.

6. Raclette-Gerät (1) nach einem der Ansprüche 4 oder 5, **dadurch gekennzeichnet, dass** jede Außenzone (18) von der der sie gegenüber der zentralen Zone (17) abgrenzenden Säule (15) entgegengesetzten Seite und von den zwei Seiten zugänglich ist, die einander gegenüberliegen und sich zwischen dieser Säule (15) und der ihr entgegengesetzten Seite erstrecken.

7. Raclette-Gerät (1) nach einem der Ansprüche 4 bis 6, **dadurch gekennzeichnet, dass** jede Außenzone (18) geeignet ist, um mindestens ein Pfännchen (2) aufzunehmen.

8. Raclette-Gerät (1) nach einem der Ansprüche 4 bis 7, **dadurch gekennzeichnet, dass** mindestens eine Säule (15) für den Durchgang des elektrischen Widerstands (4) verwendet wird.

9. Raclette-Gerät (1) nach einem der Ansprüche 4 bis 8, **dadurch gekennzeichnet, dass** es einen senkrechten seitlichen Reflektor (19) enthält, der um den elektrischen Widerstand (4) herum angeordnet ist.

10. Raclette-Gerät (1) nach Anspruch 9, **dadurch gekennzeichnet, dass** der Reflektor (19) sich senkrecht nach unten über den Widerstand (4) hinaus erstreckt und seitlich von diesem getrennt ist, damit die direkte Strahlung nicht die Greifzone (21) von zum Gerät (1) gehörenden Handgriffen (20) erreicht.

11. Raclette-Gerät (1) nach einem der Ansprüche 1 bis 9, **dadurch gekennzeichnet, dass** das Gerät Handgriffe (20) enthält, die jeden eine Greifzone (21) und eine Verbindungszone (22) haben, die die Greifzone (21) mit dem Heizkörper des Geräts verbindet und die eine reflektierende Fläche (23) enthält, die geeignet ist, die direkte Wärmestrahlung des elektrischen Widerstands (4) zu reflektieren.

12. Raclette-Gerät (1) nach einem der Ansprüche 4 bis 9 oder nach Anspruch 4 und einem der Ansprüche 10 oder 11, **dadurch gekennzeichnet, dass** der Deckel (5) eine waagrechte Hauptfläche (6) enthält, die von einer Umfangsrippe (7) umrandet wird, die sich senkrecht zu beiden Seiten der Hauptfläche (6) erstreckt.
